# EUROPEAN PATENT SPECIFICATION

(11) **EP 1 172 284 B1**
(45) Date of publication and mention of the grant of the patent: **16.01.2008**
(21) Application number: 01202468.3
(22) Date of filing: 27.06.2001
(51) Int. Cl.: B62D 33/06, B60H 3/06

(54) **Cab for agricultural vehicle**
Fahrerhaus eines landwirtschaftlichen Fahrzeugs
Cabine d'un véhicule agricole

(30) Priority: 11.07.2000 IT BO000415
(43) Date of publication of application: 16.01.2002
(73) Proprietor: CNH Italia S.p.A., 41100 Modena (IT)
(72) Inventor: Scotti, Alessandro, 41040 Modena (IT)
(74) Representative: Vandenbroucke, Alberic

(56) References cited:
- DE-A- 3 228 699
- DE-A- 4 239 249
- US-A- 2 544 500
- US-A- 3 410 599

## Description

The present invention relates to a cab for an agricultural machine, in particular a tractor.

Cabs for agricultural vehicles commonly are defined by two lateral walls, a front wall, a rear wall, and a top wall. At least one of the lateral walls has a door for entering the cab and the rear wall has a window mostly provided in the form of a hatch. Cabs of the above type have several drawbacks.

In particular, in most cabs, though an intermediate open position of the hatch may often be desired by the user, no provision is made for adjusting the hatch between the fully opened and fully closed positions. Moreover, since the hatch opens in an outward direction, it is difficult to close it again on account of the closing handle normally being fitted to the edge of the hatch which is furthest away from the cab when the hatch is open.

In DE-A-4.239.249, which disclosure is taken as basis for the preamble of independent claim 1, the problem of fixing a hatch, opened by gas springs, in an intermediate position is solved by providing a cable to the opening side of the hatch and connecting the cable to a fixed point with the hatch in a desired position. This arrangement has the disadvantage that in the fully closed position of the hatch, a long end of cable is dangling idly underneath the hatch. Moreover, in a moving vehicle, vibrations may cause the hatch intermittently to move slightly downward, in opposition to the force exerted by the gas springs, thereby releasing the tension on the cable and let it become slack. As a result thereof, the cable may disconnect from its fixation point and let the hatch open fully when not expected.

It is therefore the object of the present invention to provide an agricultural machine cab designed to eliminate the aforementioned drawbacks.

According to the present invention, there is provided an agricultural machine cab comprising
- a rear wall having a window and a hatch which is movable between a closed position, and a fully opened position;
- first spring means for pushing said hatch into said fully opened position; and
- a device to hold said hatch in an intermediate position between the closed position and the fully opened position.

The cab is characterized in that said device acts in opposition to said first spring means and comprises:
- a belt fixed at a first end to said hatch and at a second end to a fixed structure inside said cab, and kept taut by second spring means; and
- fastening means for fastening an intermediate portion of said belt to a fixed portion of said cab.

A non-limiting embodiment of the present invention will now be described by way of example with reference to the accompanying drawings, in which:
Figure 1 shows a view in perspective of an agricultural tractor cab in accordance with the teachings of the present invention;
Figure 2 shows a larger-scale view of part of the Figure 1 cab; and
Figure 3 shows a larger-scale detail of Figure 2.

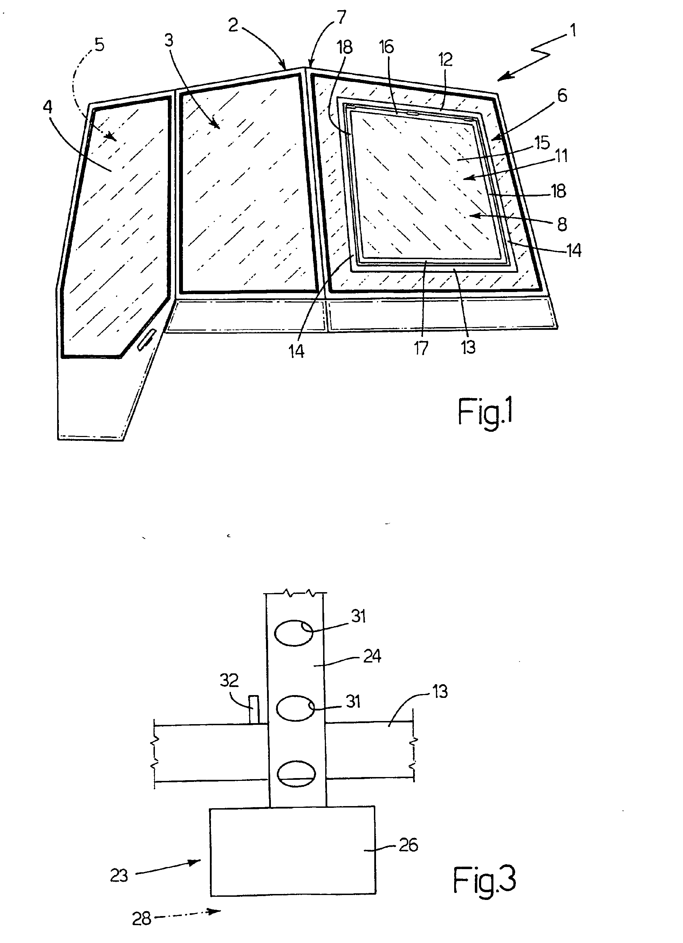

Reference number 1 in Figure 1 indicates as a whole a cab for an agricultural vehicle (not shown), in particular a tractor. Cab 1 is supported on the chassis of the agricultural vehicle and comprises a frame 2 defined by a number of posts and cross members. The cab 1 is fitted with transparent panels defining two lateral walls 3 - at least one of which has a door 4 - a front wall 5, a rear wall 6, and a top wall 7. Rear wall 6 has a window 8 with a hatch 11.

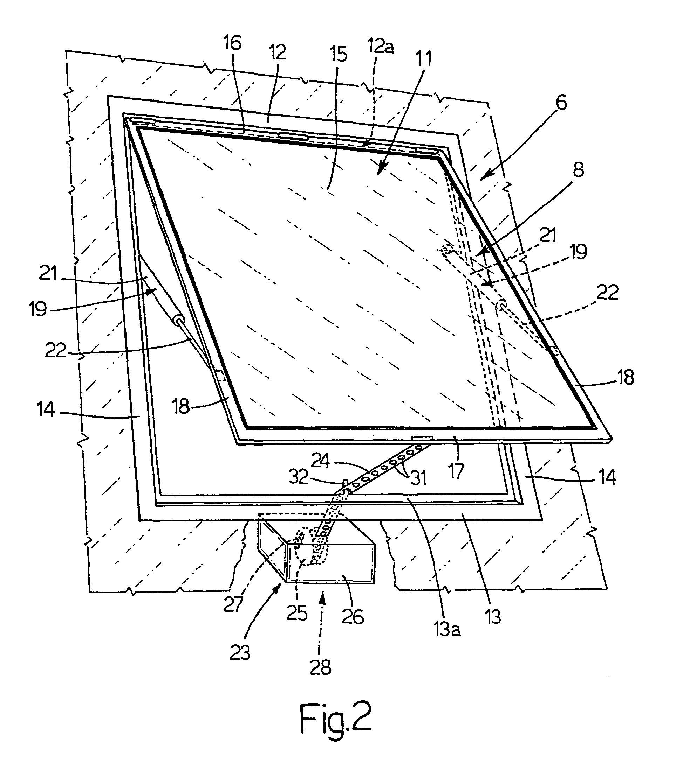

With reference to Figures 1 and 2, window 8 comprises a fixed frame defined by a horizontal top bar 12, a horizontal bottom bar 13, and two vertical lateral posts 14. Hatch 11 has a frame supporting a panel 15 of transparent material, the frame being defined by a horizontal top bar 16, a horizontal bottom bar 17, and two lateral bars 18. Hatch 11 is hinged to window 8, more specifically by known hinge means provided between horizontal bar 12 of window 8 and horizontal bar 16 of hatch 11. On the respective faces of bars 12 and 13 facing outwardly of the cab 1, respective abutment surfaces 12a and 13a are defined against which bars 16 and 17 of hatch 11 rest when hatch 11 is closed.

Although in the embodiment of Figure 1 the hatch 11 is represented as only a portion of the rear cab wall 6, it will be appreciated that in an alternative arrangement (not shown) the hatch equally well could be formed by the full surface of the rear window. In this particular case, the hatch 11 would be hingeably connected to the top wall of the cab 1. It furthermore will be understood that due to the inherent strength of present day glass used in cab windows, the hatch 11 not necessarily is bordered by a rigid frame, in which case all elements, such as the hinges, connected to the hatch 11 would be directly fixed to the glass instead of to the frame. Such alternative embodiments are only a matter of design choice and do not depart from the scope of the present invention.

With reference to Figure 2, two known gas springs 19, each defined by a pneumatic cylinder 21 and a sliding rod 22, are fitted between window 8 and hatch 11. One end of each cylinder 21 is hinged to a respective post 14 of window 8, and the free end of each sliding rod 22 is hinged to a respective lateral bar 18 of hatch 11. In actual use, when hatch 11 is in the closed position, each gas spring 19 is positioned with its longitudinal axis substantially parallel to that of respective post 14, and therefore no opening thrust is exerted on hatch 11. On the other hand, when manual pressure is exerted on hatch 11 in an outward direction relative to the cab 1, the gas springs 19 push hatch 11 towards a fully opened position.

With reference to Figures 2 and 3, cab 1 comprises a device 23 for adjusting the opening of hatch 11. The device 23 comprises a belt 24 wound around a pulley 25 provided inside a box shaped holder 26. The pulley 25 is provided with an internal, helical spring 27 for maintaining a rotational return tension thereon. As such, when the belt 24 has been extracted from the holder 26 by an external force, thereby tensioning the spring 27, the belt 24 automatically is re-wound on the pulley 25 when the external force on the belt 24 is lifted. The arrangement is made such that the mechanical action of the spring 27 is weaker than the counter-action of the combined gas springs 19. The holder 26 is located inside cab 1, below the bottom edge (bar 13) of window 8, and is integral with a fixed structure 28 of the agricultural machine (not shown). The free end of belt 24 is fixed to the hatch 11, more particularly to the bar 17 and as already mentioned, as a result of the spring 27, the belt 24 is always kept taut.

It should be pointed out that, given the position of the holder 26 with respect to the window 8, the straight line theoretically connecting the holder 26 to the portion of hatch 11 to which belt 24 is attached, extends through the bar 13, so that belt 24 is permanently pressed on the edge of bar 13 inwardly of the cab 1, as shown in Figure 2. As shown in more detail in Figure 3, belt 24 comprises a number of perforations 31 equally spaced along the whole length of the belt 24. In addition, the device 23 comprises a vertical pin 32 extending from a portion of bar 13 inwards of the portion against which hatch 11 rests and close to the portion at which belt 24 normally contacts bar 13.

In actual use, when window 8 is in the fully closed position, hatch 11 rests against the fixed frame of window 8, the gas springs 19 are substantially vertical and have no opening effect on hatch 11, and belt 24 is wound entirely around pulley 25 (except, of course, for the end portion defined between holder 26 and the hatch 11). Under the above condition, a small amount of manual pressure on hatch 11 is sufficient for gas springs 19 to overcome the opposite force of the spring 27 exerted via belt 24 on the hatch 11 and as a result open said hatch 11.

By gripping the belt 24, the vehicle operator then has the possibility to insert pin 32 inside a perforation 31 of his choice. In so doing, the portion of the belt 24 between pin 32 and hatch 11 is kept taut by gas springs 19, and the portion of the belt 24 between pin 32 and pulley 25 is kept taut by the spring 27. It will be understood that the length of the portion of belt 24 between pin 32 and hatch 11 depends on which perforation 31 is engaged by pin 32, this in itself varying the amount by which the hatch 11 is intermediately opened.

To close the hatch 11, belt 24 is simply drawn towards the interior of the cab 1 to pull hatch 11 into the closed position defined above; this position being maintained either by inserting pin 32 into the perforation 31 closest to the hatch 11 or by a closing handle (not shown).

The advantages of the present invention will be apparent from the foregoing description.

In particular, a cab is provided enabling the hatch 11 to be set easily to any intermediate open position, this by means of a device 23 which is cheap and easy to produce and can be assembled in a simple manner, even as a retro-fit to existing agricultural vehicles. Moreover, hatch 11 is also easier to close than commonly known rear hatch systems.

## Claims

1. An agricultural machine cab (1) comprising :
- a rear wall (6) having a window (8) and a hatch (11) which is movable between a closed position, and a fully opened position;
- first spring means (19) for pushing said hatch (11) into said fully opened position; and
- a device (23) to hold said hatch (11) in an intermediate position between the closed position and the fully opened position; and
**characterized in that** said device (23) acts in opposition to said first spring means (19) and comprises:
- a belt (24) fixed at a first end to said hatch (11) and at a second end to a fixed structure (28) inside said cab (1), and kept taut by second spring means (27); and
- fastening means (32) for fastening an intermediate portion of said belt (24) to a fixed portion (13) of said cab (1).

2. A cab (1) according to claim 1, **characterized in that** said device (23) further comprises a pulley (25) integral with said fixed structure (28) and about which said belt (24) is wound; said second spring means (27) urging said belt (24) in a direction to be wound around said pulley (25).

3. A cab (1) according to claim 1 or 2 **characterized in that** the mechanical action of said second spring means (27) is weaker than the mechanical action of said first spring means (19).

4. A cab (1) according to any of the preceding claims, **characterized in that** said belt (24) has a number of perforations (31); said fastening means comprising a pin (32) for engaging one of said perforations (31).

5. A cab (1) according to claim 4, **characterized in that** said pin (32) extends from an edge of said window (8).

6. A cab (1) according to claims 4 and 5, **characterized in that** said perforations (31) are equally spaced along the length of said belt (24).

7. A cab (1) according to any of the preceding claims, **characterized in that**:
- said window (8) has a fixed frame defined by a horizontal top bar (12), a horizontal bottom bar (13), and two vertical lateral posts (14); and
- said hatch (11) has a frame supporting a panel (15) of transparent material; hinge means being located between said top bar (12) and the top edge of said hatch (11).

8. A cab (1) according to any of the preceding claims, **characterized in that** said first spring means comprise at least one gas spring (19) defined by a pneumatic cylinder (21) and by a sliding rod (22); a first end of said gas spring (19) being hinged to a lateral edge (14) of said window (8), and a second end of said gas spring (19) being hinged to a lateral edge (18) of said hatch (11).

## Patentansprüche

1. Fahrerhaus (1) für eine landwirtschaftliche Maschine, mit:
- einer Rückwand (6), die ein Fenster (8) und eine Klappe (11 aufweist, die zwischen einer geschlossenen Stellung und einer vollständig geöffneten Stellung beweglich ist;
- einer ersten Federeinrichtung (19) zum Drücken der Klappe (11) in die vollständig geöffnete Stellung; und
- eine Vorrichtung (23) zum Halten der Klappe (11) in einer Zwischenstellung zwischen der geschlossenen Stellung und der vollständig geöffneten Stellung; und
**dadurch gekennzeichnet, dass** die Vorrichtung (23) entgegengesetzt zu der ersten Federeinrichtung (19) wirkt und Folgendes umfasst:
- einen Riemen (24), der an einem ersten Ende mit der Klappe (11) und an einem zweiten Ende mit einer festen Struktur (28) im Inneren der Kabine (1) befestigt ist und durch zweite Federeinrichtungen (27) straff gehalten wird; und
- eine Befestigungseinrichtung (32) zum Befestigen eines zwischenliegenden Teils des Riemens (24) an einem festen Teil (13) des Fahrerhauses (1).

2. Fahrerhaus (1) nach Anspruch 1, **dadurch gekennzeichnet, dass** die Vorrichtung (23) weiterhin eine Riemenscheibe (25) umfasst, die einstückig mit der festen Struktur (28) verbunden ist und um die der Riemen (24) aufgewickelt wird; wobei die zweite Federeinrichtung (27) den Riemen (24) in einer derartigen Richtung vorspannt, dass er auf die Riemenscheibe (25) aufgewickelt wird.

3. Fahrerhaus (1) nach Anspruch 1 oder 2, **dadurch gekennzeichnet, dass** die mechanische Wirkung der zweiten Federeinrichtung (27) schwächer als die mechanische Wirkung der ersten Federeinrichtung (19) ist.

4. Fahrerhaus (1) nach einem der vorhergehenden Ansprüche, **dadurch gekennzeichnet, dass** der Riemen (24) eine Anzahl von Perforationen (31) hat, wobei die Befestigungseinrichtung einen Stift (32) für den Eingriff mit einer der Perforationen (31) umfasst.

5. Fahrerhaus (1) nach Anspruch 4, **dadurch gekennzeichnet, dass** sich der Stift (32) von einer Kante des Fensters (8) aus erstreckt.

6. Fahrerhaus (1) nach den Ansprüchen 4 und 5, **dadurch gekennzeichnet, dass** die Perforationen (31) einen gleichförmigen Abstand entlang der Länge des Riemens (24) haben.

7. Fahrerhaus (1) nach einem der vorhergehenden Ansprüche, **dadurch gekennzeichnet, dass** das Fenster (8) einen festen Rahmen aufweist, der durch eine horizontale obere Stange (12), eine horizontale untere Stange (13) und zwei vertikale seitliche Pfosten (14) begrenzt ist; und
- die Klappe (11) einen Rahmen aufweist, der eine Platte (15) aus transparentem Material trägt, wobei Scharniereinrichtungen zwischen der oberen Stange (12) und der Oberkante der Klappe (11) vorgesehen sind.

8. Fahrerhaus (1) nach einem der vorhergehenden Ansprüche, **dadurch gekennzeichnet, dass** die ersten Federeinrichtungen zumindest eine Gasfeder (19) umfassen, die durch einen Pneumatikzylinder (21) und eine Gleitstange (22) gebildet ist, wobei ein erstes Ende der Gasfeder (19) gelenkig mit einer Seitenkante (14) des Fensters (8) verbunden ist, und ein zweites Ende der Gasfeder (19) gelenkig mit einer Seitenkante (18) der Klappe (11) verbunden ist.

## Revendications

1. Cabine (1) pour machine agricole comprenant :
- une paroi arrière (6) possédant une fenêtre (8) et un abattant (11) qui peut se déplacer entre une position fermée et une position entièrement ouverte ;
- des premiers moyens à ressort (19) pour pousser ledit abattant (11) dans ladite position entièrement ouverte, et
- un dispositif (23) pour maintenir ledit abattant (11) dans une position intermédiaire entre la position fermée et la position entièrement ouverte ; et
**caractérisée en ce que** ledit dispositif (23) agit en opposition auxdits premiers moyens à ressort (19) et comprend :
- une courroie (24) fixée à une première extrémité dudit abattant (11) et à une seconde extrémité d'une structure fixe (28) à l'intérieur de ladite cabine (1) et maintenue tendue par de seconds moyens à ressort (27) ; et
- des moyens de fixation (32) pour fixer une partie intermédiaire de ladite courroie (24) à une partie fixe (13) de ladite cabine (1).

2. Cabine (1) selon la revendication 1, **caractérisée en ce que** ledit dispositif (23) comprend également une poulie (25) faisant partie intégrante de ladite structure fixe (28) et autour de laquelle ladite courroie (24) est enroulée ; lesdits seconds moyens à ressort (27) poussant ladite courroie (24) dans une direction qui fait qu'elle s'enroule autour de ladite poulie (25).

3. Cabine (1) selon la revendication 1ou 2, **caractérisée en ce que** l'action mécanique desdits seconds moyens à ressort (27) est plus faible que l'action mécanique desdits premiers moyens à ressort (19).

4. Cabine (1) selon l'une quelconque des revendications précédentes, **caractérisée en ce que** ladite courroie (24) possède un certain nombre de perforations (31) ; lesdits moyens de fixation comprenant une broche (32) à insérer dans l'une desdites performations (31).

5. Cabine (1) selon la revendication 4, **caractérisée en ce que** ladite broche (32) s'étend depuis un bord de ladite fenêtre (8).

6. Cabine (1) selon les revendications 4 et 5, **caractérisée en ce que** lesdites perforations (31) sont espacées de manière égale sur la longueur de ladite courroie (24).

7. Cabine (1) selon l'une quelconque des revendications précédentes, **caractérisée en ce que** :
- ladite fenêtre (8) possède un cadre fixe défini par une barre supérieure horizontale (12), une barre inférieure horizontale (13), et deux montants latéraux verticaux (14) ; et
- ledit abattant (11) possède un cadre supportant un panneau (15) dans un matériau transparent ; les moyens d'articulation étant situés entre ladite barre supérieure (12) et le bord supérieur dudit abattant (11).

8. Cabine (1) selon l'une quelconque des revendications précédentes, **caractérisée en ce que** lesdits premiers moyens à ressort comprennent au moins un ressort à gaz (19) défini par un vérin pneumatique ((21) et par une tige coulissante (22) ; une première extrémité dudit ressort à gaz (19) étant articulée sur un bord latéral (14) de ladite fenêtre (8), et une seconde extrémité du ressort à gaz (19) étant articulée sur un bord latéral (18) dudit abattant (11).
